# EUROPÄISCHE PATENTSCHRIFT

(11) **EP 3 009 206 B1**
(45) Veröffentlichungstag und Bekanntmachung des Hinweises auf die Patenterteilung: **28.06.2017**
(21) Anmeldenummer: 15183974.3
(22) Anmeldetag: 04.09.2015
(51) Int. Cl.: B21B 38/02

(54) **PLANHEITSMESSROLLE MIT MESSBALKEN IN BANDLAUFRICHTUNG**
FLATNESS MEASURING ROLL WITH MEASURING BEAM IN ROLLING DIRECTION
ROULEAU DE MESURE DE LA PLANÉITÉ ET BARRE PORTE-LAME DE MESURE DANS LE SENS DE LA BANDE

(30) Priorität: 16.10.2014 DE 102014115023
(43) Veröffentlichungstag der Anmeldung: 20.04.2016
(73) Patentinhaber: BWG BERGWERK- UND WALZWERK-MASCHINENBAU GMBH, 47051 Duisburg (DE)
(72) Erfinder: Noé, Andreas, 47647 Kerken (DE); Werner, Marc, 47475 Kamp-Linfort (DE); Moos, Christoph, 46419 Isselburg (DE)
(74) Vertreter: von dem Borne, Andreas

(56) Entgegenhaltungen:
- EP-A1- 1 566 227
- EP-A2- 1 653 207
- DE-A1- 4 135 614

## Beschreibung

Die Erfindung betrifft eine Planheitsmessrolle zur Ermittlung von Planheitsfehlern eines Bandes, insbes. Metallbandes, im Wege einer Messung der Bandzugspannungsverteilung über die Bandbreite, mit mehreren in die Rollenoberfläche integrierten Messstellen, welche für die Messung der Bandzugspannung über die Rollenbreite verteilt an verschiedenen Breitenpositionen angeordnet sind, wobei die Messstellen jeweils einen mit der Rollenoberfläche fluchtenden Messkörper aufweisen, der auf einem oder mehreren Kraftmesssensoren angeordnet ist.

Mit solchen Planheitsmessrollen werden Planheitsfehler in Bändern, insbesondere Metallbändern, im Wege einer Messung der Bandzugspannungsverteilung über die Bandbreite ermittelt, wobei das über die gesamte Bandbreite unter einem Bandzug stehende Band die Planheitsmessrolle mit einem vorgegebenen Umschlingungswinkel umschlingt und dadurch örtliche Anpresskräfte entsprechend der örtlichen Längszugsspannungsverteilung in Bandbreitenrichtung auf die Planheitsmessrolle ausübt, aus denen sich die Bandzugsspannungsverteilung erfassen lässt. Aus der Bandzugsspannungsverteilung über die Bandbreite lassen sich dann unmittelbar Bandfehler und insbesondere Welligkeiten bzw. Bandsäbel ermitteln, da Längenabweichungen einzelner Bandstreifen durch Zugspannungsunterschiede repräsentiert werden.

Die Messkörper der einzelnen Messstellen bilden Abdeckungen, die auf die darunter angeordneten Kraftmesssensoren, z. B. Piezo-Quarze wirken. Dabei ist es zweckmäßig, die Abdeckungen unter Zwischenschaltung der Piezo-Quarze gegen die Rolle zu verspannen. Um einen Kraftnebenschluss zwischen den Messkörpern bzw. Abdeckungen einerseits und dem Rollenkörper andererseits zu minimieren, ist vorgesehen, dass die Messkörper bzw.

Abdeckungen durch einen vollständig umlaufenden Spalt von der Rollenfläche entkoppelt sind und ausschließlich gegen die Kraftsensoren verspannt sind, ohne weiteren Kontakt mit dem Rollenmaterial. Die Messkörper bzw. Abdeckungen werden folglich im Zuge der Belastung (vollständig) und ohne nennenswerte Verformung der Abdeckung gegen die Kraftmesssensoren bewegt.

Derartige Messrollen sind z. B. aus der EP 0 595 072 B2 oder der DE 10 2004 008 303 A1 bekannt.

Bei der aus der EP 0 595 072 B2 bekannten Planheitsmessrolle sind die Messkörper als kreisförmige Abdeckungen ausgebildet, die auf jeweils einem Kraftmessgeber aufliegen. Über die Bandbreite sind eine Vielzahl von solchen Messstellen verteilt angeordnet, so dass mit den einzelnen Messstellen die Bandzugspannung für unterschiedliche Breitenpositionen erfasst wird. Dabei ist es außerdem vorgesehen, dass diese Messstellen nicht nur über die Bandbreite, sondern auch über den Umfang der Rolle verteilt angeordnet sind. Mit jeder Messstelle lässt sich bei jedem Umlauf ein Messwert erfassen.

Aus der DE 10 2004 008 303 A1 kennt man eine Planheitsmessrolle, bei der in die Rollenoberfläche Planheitsmessbalken als Messkörper integriert sind, welche auf den Sensoren abgestützt sind und zur Bestimmung der Zugspannungsverteilung über die Bandbreite schräg zur Rollenachse verlaufen, so dass sich ein solcher Messbalken einerseits über einen vorgegebenen Breitenbereich und andererseits über einen vorgegebenen Umfangsbereich der Rolle erstreckt. Durch einen solchen schräg zur Rollenachse angeordneten Messbalken lassen sich zeitlich nacheinander eine Vielzahl von Messwerten erfassen, die jeweils unterschiedlichen Breitenpositionen der Rolle und damit auch des Bandes zugeordnet sind, so dass mit einem Messkörper (nämlich einem Messbalken) Messungen an unterschiedlichen Breitenpositionen durchgeführt werden können. Dabei ist es in der Regel vorgesehen, mehrere solcher Planheitsmessbalken über die Bandbreite verteilt anzuordnen, welche jeweils einen bestimmten Breitenbereich der Messrolle bzw. Metallbandes abdecken.

Die bekannten Planheitsmessrollen haben sich grundsätzlich bewährt, sie sind jedoch weiterentwicklungsfähig, und zwar insbesondere hinsichtlich der Messgenauigkeit. - Hier setzt die Erfindung ein.

Im Übrigen ist aus der DE 41 35 614 A1 eine Planheitsmessrolle bekannt, bei welcher der Kraftmesssensor mit einer Brücke abgedeckt ist, die sich entlang des Rollenumfangs erstreckt und dabei beidseitig unmittelbar mit Schraubenbolzen im Querschnitt der Umlenkrolle fixiert ist, so dass im Zuge der Messung eine Verformung der Brücke erfolgen muss.

Ähnliches gilt für eine aus der EP 2 447 198 A1 bekannte Messrolle, bei der die Messstellenanordnungen in Ausnehmungen der Rolle aufgehängt sind.

Der Oberbegriff von Anspruch 1 basiert auf der EP 1 566 227 A1. Der Erfindung liegt die Aufgabe zugrunde, eine Planheitsmessrolle der eingangs beschriebenen Art zu schaffen, mit der sich Planheitsfehler im Wege einer Messung der Bandzugspannungsverteilung mit erhöhter Messgenauigkeit bei gleichzeitig einfachem Aufbau erfassen lassen.

Zur Lösung dieser Aufgabe lehrt die Erfindung eine Planheitsmessrolle gemäß Anspruch 1 vorzusehen.

Die Erfindung geht dabei von der Erkenntnis aus, dass sich die Messgenauigkeit deutlich erhöhen lässt, wenn die Planheitsmessrolle bzw. deren Messstellen so ausgestaltet werden, dass bei jeder Rollenumdrehung und folglich innerhalb jedes Messzyklus mit einer einzelnen Messstelle (die sich aus Messkörper einerseits und Kraftmesssensor bzw. Kraftmesssensoren andererseits zusammensetzt) mehrere Messwerte für eine bestimmte Breitenposition bzw. Breitenkoordinate erfassbar sind, so dass aus diesen Messwerten z. B. ein Mittelwert gebildet werden kann. Durch eine solche Mehrfachmessung und Mittelwertbildung verringern sich Messunsicherheiten und Messfehler, so dass die Messgenauigkeit erhöht wird. Dieses gelingt erfindungsgemäß dadurch, dass die Messstellen mit Messkörpern ausgestaltet sind, die über zumindest einen Teil ihrer Länge eine im Wesentlichen konstante Breite aufweisen, so dass zeitlich nacheinander mit ein und demselben Messkörper mehrere Messwerte für dieselbe Breitenposition erfasst werden. Diese Länge des Messkörpers mit identischer Breite definiert die Messlänge.

Während sich z. B. bei den bekannten Planheitsmessrollen nach dem Stand der Technik mit runden Abdeckungen beim Überlaufen des Bandes die Größe der Kontaktfläche ständig ändert und deshalb nur das entsprechende Maximum innerhalb eines Messzyklus und folglich bei einer Rollenumdrehung ausgewertet werden kann, besteht bei der erfindungsgemäßen Lösung die Möglichkeit, pro Messzyklus und folglich pro Rollenumdrehung eine Vielzahl von "nutzbaren Messwerten" zu erfassen, denn innerhalb der Messlänge können für dieselbe Breitenkoordinate repräsentative Messwerte aufgenommen werden, ohne dass diese durch unterschiedlich große Kontaktflächen verfälscht werden. Die Messkörper sind dabei in grundsätzlich bekannter Weise durch einen vollständig umlaufenden Spalt von der Rollenoberfläche entkoppelt und ausschließlich gegen die Kraftsensoren verspannt. Im Gegensatz zu den aus der DE 41 35 614 A1 bekannten Messstellen erfolgt die Messwerterfassung nicht durch Verformung einer Messbrücke, sondern durch vollständiges "Betätigen" des Messkörpers, z. B. des Messbalkens, so dass auch bereits dann Messwerte erfasst werden können, wenn das Band den Messkörper innerhalb der Messlänge lediglich im Randbereich abdeckt.

Grundsätzlich kommen verschiedene geometrische Formen für die Messkörper in Frage, sofern sie über einen bestimmten Teil der Länge eine im Wesentlichen konstante Breite aufweisen. Die Messkörper dieser Abdeckungen können folglich z. B. quadratisch ausgebildet sein. Gemäß der Erfindung sind die Messkörper jedoch rechteckförmig (bzw. streifenförmig) als Messbalken ausgebildet, die eine größere Länge als Breite aufweisen. Dabei geht die Erfindung von der Erkenntnis aus, dass durch eine große Länge bzw. Messlänge der Messkörper (entlang der Umfangsrichtung) eine Vielzahl von Messwerten für die jeweilige Breitenkoordinate erfassbar sind. Die Reduzierung der Breite gegenüber der Länge hat den Vorteil, dass über die Rollenbreite und folglich auch über die Bandbreite eine Vielzahl von Messkörpern in einer Reihe nebeneinander angeordnet werden können, so dass die Auflösung der Messung über die Bandbreite erhöht werden kann. Die Messlänge des Messkörpers ist dabei bevorzugt länger als die Kontaktlänge des Bandes mit der Rolle aufgrund des Umschlingungswinkels.

Wird z. B. bei einem Rollendurchmesser von 600 mm mit einem Umschlingungswinkel von 5° gearbeitet, so ergibt sich daraus eine theoretische Kontaktlänge des Bandes von etwa 26 mm. Bei einer Messlänge eines Messbalkens von 80 mm und einer Messung pro 2 mm folgt, dass das Band den Messbalken zu Beginn bei 0 bis 26 mm kontaktiert und bei der nächsten Messung bei 2 mm bis 28 mm usw.. Zum Schluss der jeweiligen Messung erfolgt der Kontakt bei 54 mm bis 80 mm, so dass je Messzyklus bei diesem Ausführungsbeispiel 28 Messungen mit einem Messbalken für die jeweilige Breitenkoordinate möglich sind. Gemäß der Erfindung liegen die Messbalken jeweils auf zwei in Längsrichtung (fluchtend) hintereinander angeordneten Kraftmesssensoren auf. Diese sind bevorzugt jeweils in den Endbereichen der Messbalken angeordnet. In diesem Fall können die beiden bzw. mehreren Kraftmesssensoren zur Erfassung des Messwertes verwendet werden, indem die beiden Signale z. B. aufsummiert werden. Damit lassen sich zuverlässig über die gesamte Messlänge repräsentative Messwerte aufnehmen, unabhängig davon, ob der Messbalken bzw. Messkörper primär im Bereich eines der Sensoren oder z. B. auch zwischen den Sensoren belastet wird. Da während der Messung die resultierende Messkraft über den Messbalken wandert und - je nach Rollendurchmesser - nicht immer exakt in Messrichtung der Kraftaufnehmer steht, die versetzt zum Radius orientiert sein können, können "Messfehler" zumindest theoretisch auftreten. Diese Abweichungen sind jedoch bei üblichen Rollendurchmessern sehr gering und im Übrigen besteht ohne weiteres die Möglichkeit, diese Abweichungen aufgrund der bekannten Winkellage rechnerisch zu korrigieren.

Besonders bevorzugt sind mehrere Messstellen in einer Messstellengruppe zusammengefasst, wobei eine solche Messstellengruppe eine Vielzahl von Messstellen aufweist, die über die Rollenbreite verteilt mit Abständen zueinander an einer gemeinsamen Umfangs- bzw. Winkelposition angeordnet sind. Auf diese Weise besteht die Möglichkeit, mit einer solchen Messstellengruppe zeitgleich bei einer Winkelposition der Rolle die Bandzugspannungsverteilung über die Bandbreite zu messen. Da mit verhältnismäßig schmalen Messkörpern, z. B. Messbalken, gearbeitet werden kann, besteht die Möglichkeit, eine Vielzahl von Messstellen nebeneinander bei einer gemeinsamen Winkelposition anzuordnen. Im Gegensatz zu z. B. runden Abdeckungen bzw. Messstellen ist es nicht erforderlich, die nebeneinander angeordneten Messstellen über den Umfang versetzt zueinander zu positionieren. Dabei ist es aus Stabilitätsgründen zweckmäßig, einen gewissen (freien) Mindestabstand zwischen zwei benachbarten Messstellen einzuhalten, der z. B. 20 mm bis 100 mm, vorzugsweise 30 mm bis 70 mm, beträgt. Auf diese Weise kann die Steifigkeit der Rolle insgesamt gewährleistet werden, auch wenn eine Vielzahl von Messbalken unmittelbar nebeneinander angeordnet sind.

In Weiterbildung dieser Ausführungsform besteht die Möglichkeit, mehrere solcher Messstellengruppen bzw. Messbalkenreihen über den Umfang der Rolle zu verteilen, wobei jede Messstellengruppe an unterschiedlichen Winkelpositionen angeordnet ist. Dabei besteht die Möglichkeit, dass die Messstellen der Messstellengruppen jeweils an gleichen Breitenpositionen bzw. Breitenkoordinaten angeordnet sind, so dass mit den Messstellengruppen jeweils an denselben Breitenkoordinaten gemessen wird. In diesem Fall besteht die Möglichkeit, bei einer Rollenumdrehung mit jeder einzelnen Messbalkengruppe eine vollständige Messung über die Bandbreite durchzuführen, so dass die Messgenauigkeit durch Mittelwertbildung weiter erhöht wird. Alternativ besteht jedoch auch die Möglichkeit, die Messstellen zweier in Umfangsrichtung hintereinander angeordneter Messstellengruppen zumindest teilweise in Breitenrichtung versetzt zueinander anzuordnen, so dass dann mit einer Messstellengruppe andere Breitenkoordinaten gemessen werden als mit der anderen Messstellengruppe. Damit lässt sich die Auflösung der Messung über die Bandbreite erhöhen, so dass eine "quasi kontinuierliche" Auflösung möglich wird. Wenn z. B. acht Reihen Messbalken am Umfang der Rolle angeordnet werden, die mit jeweils 50 mm Messabstand innerhalb einer Reihe angeordnet sind, so kann bei einer Rollenumdrehung eine Auflösung von 6,25 mm in Bandbreitenrichtung erreicht werden.

Im Falle einer versetzten Anordnung liegt es im Rahmen der Erfindung, dass alle Messstellengruppen an einer vorgegebenen Breitenposition eine Messstelle aufweisen, das heißt, mindestens eine Messstelle pro Messstellengruppe ist stets an der gleichen Bandbreitenkoordinate angeordnet, z. B. stets in der Bandmitte. Eine solche Messstelle kann als Referenzmessstelle dienen. Sofern die Messung Abweichungen an derselben Breitenkoordinate ergibt, kann damit auf Bandzugschwankungen geschlossen werden, so dass mit Hilfe eines solchen Referenzbalkens Bandzugschwankungen herausgefiltert werden können.

Die Rolle kann in grundsätzlich bekannter Weise unbeschichtet oder beschichtet ausgeführt sein. Dabei kann auf grundsätzlich bekannte Beschichtungen, z. B. aus Gummi/Kunststoff oder auch Hartbeschichtungen wie z. B. Wolframcarbid zurückgegriffen werden. Die Beschichtung kann - wie bei bekannten Planheitsmessrollen - an den jeweiligen Anwendungszweck angepasst werden.

Gegenstand der Erfindung ist auch ein Verfahren zur Ermittlung von Planheitsfehlern eines Bandes im Wege einer Messung der Bandzugspannungsverteilung über die Bandbreite mit einer Planheitsmessrolle der beschriebenen Art. Dieses Verfahren zeichnet sich dadurch aus, dass mit den Messstellen bei jeder Rollenumdrehung jeweils eine Vielzahl von Messwerten für die jeweilige Breitenposition erfasst werden. Bevorzugt kann aus den für die jeweilige Breitenposition mit der Messstelle ermittelten Messwerten jeweils ein Mittelwert bestimmt werden. Die Kontaktlänge des Bandes mit der Messstelle bzw. mit dem Messbalken ist dabei bevorzugt geringer als die Länge der Messstelle bzw. des Messbalkens. Es liegt im Übrigen im Rahmen der Erfindung, vor jedem Auflaufen des Bandes auf die jeweiligen Messstellen einen Reset der Kraftmesssensoren durchzuführen.

Im Folgenden wird die Erfindung anhand einer lediglich ein Ausführungsbeispiel darstellenden Zeichnung näher erläutert. Es zeigen:

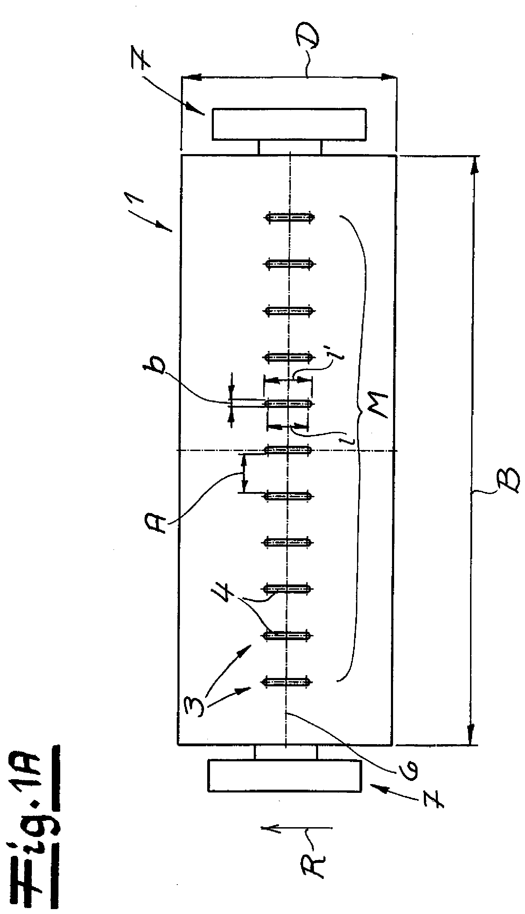

- Fig. 1a: eine erfindungsgemäße Planheitsmessrolle in einer Draufsicht auf die Rollenoberfläche,
- Fig. 1 b: den Gegenstand nach Fig. 1a in einem Querschnitt,
- Fig. 2: einen vergrößerten Ausschnitt aus dem Gegenstand nach Fig. 1b,
- Fig. 3a, 3b: den Gegenstand nach Fig. 1a, 1b in einer abgewandelten Ausführungsform,
- Fig. 4a, 4b: den Gegenstand nach Fig. 1a, 1b in einer weiteren Ausführung,
- Fig. 5a, 5b: den Gegenstand nach Fig. 1a, 1b in einer abgewandelten Ausführung.

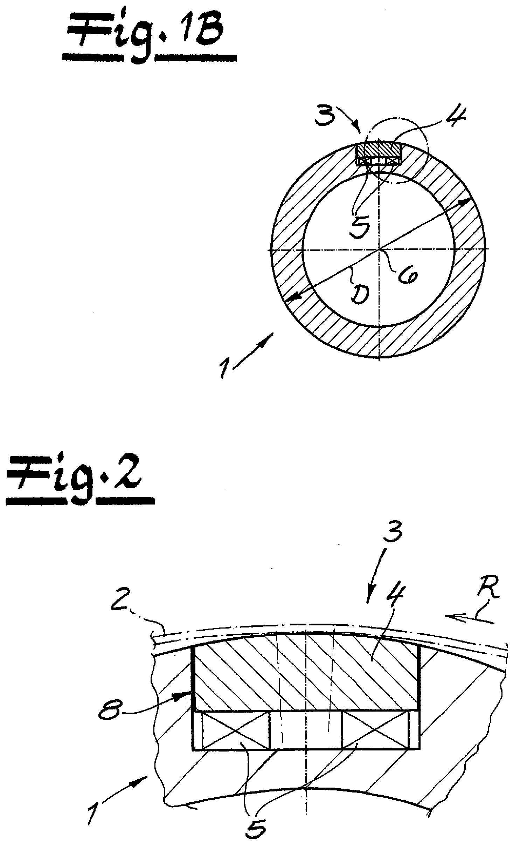

In den Figuren ist eine Planheitsmessrolle 1 mit einem Durchmesser D dargestellt, mit der sich Planheitsfehler eines Bandes 2, insbesondere eines Metallbandes, im Wege einer Messung der Bandzugspannungsverteilung über die Bandbreite ermitteln lassen. Eine solche Planheitsmessrolle 1 ist in der Regel passiv und folglich nicht angetrieben in eine Bandbehandlungsanlage integriert, so dass im kontinuierlichen Betrieb die Planheit des Bandes 2 ermittelt werden kann, wobei das Band die Planheitsmessrolle 1 mit vorgegebenen Umschlingungswinkel umschlingt. Das Band 2 ist in Fig. 2 lediglich angedeutet. Eine solche Planheitsmessrolle 1 weist eine Vielzahl von Messstellen 3 auf, die in die Rollenoberfläche integriert sind und für die Messung der Bandzugspannung über die Rollenbreite B verteilt an verschiedenen Breitenpositionen angeordnet sind. Jede der Messstellen 3 weist jeweils einen mit der Rollenoberfläche fluchtenden Messkörper 4 auf, der im Ausführungsbeispiel als Messbalken 4 ausgebildet ist und der auf zwei Kraftmesssensoren 5 angeordnet ist. Bei diesen Kraftmessgebern 5 bzw. Kraftmesssensoren kann es sich z. B. um Piezo-Quarze bzw. um Messelemente mit solchen Piezo-Quarzen handeln. Die Messkörper 4 sind als Abdeckungen der Kraftmesssensoren 5 unter Zwischenschaltung dieser Sensoren 5 gegen die Rolle verspannt, z. B. mit Befestigungsschrauben, Befestigungsstangen oder dergleichen, die jedoch in den Figuren nicht gezeigt sind. Dabei kann auf die grundsätzlich bekannten Lösungen, z. B. aus DE 10 2004 008 303 A1 oder DE 10 2008 030 282 B3 zurückgegriffen werden.

Erfindungsgemäß sind die Messkörper 4 mit ihrer in Bandlaufrichtung R verlaufenden Längsrichtung in einer Draufsicht auf die Rollenoberfläche senkrecht zur Rollenachse 6 orientiert. Die Messkörper, die im Ausführungsbeispiel als Messbalken 4 ausgebildet sind, sind folglich nicht wie beim Stand der Technik nach DE 10 2004 008 303 A1 schräg zur Rollenachse angeordnet, sondern gerade. Dabei weisen diese Messbalken 4 über den wesentlichsten Teil ihrer Länge I' eine konstante Breite b auf. Dieser Teil der Länge I' wird als Messlänge I bezeichnet. Im Ausführungsbeispiel weisen die Messbalken 4 eine größere Länge I' und auch eine größere Messlänge I als die Breite b auf.

Durch die erfindungsgemäße Ausgestaltung besteht die Möglichkeit, mit jeder einzelnen Messstelle 3 jeweils eine Vielzahl von Messwerten je Rollenumdrehung für die Bandzugspannung an einer jeweiligen Breitenposition des Bandes vorzunehmen. Sofern der Rollendurchmesser D z. B. 600 mm und der Umschlingungswinkel 5° beträgt, können bei einer Messlänge I des Messbalkens 4 von z. B. 80 mm und einer Messung pro 2 mm pro Rollenumdrehung 28 Messungen mit derselben Messstelle durchgeführt werden. Dadurch lässt sich die Messgenauigkeit erheblich erhöhen, denn aus diesen einzelnen Messwerten kann z. B. ein Mittelwert gebildet werden, und zwar für jede einzelne Rollenumdrehung.

Die Fig. 1a und 1b zeigen dabei eine erste Ausführungsform, bei der sämtliche Messstellen 3 unter Bildung einer Messstellengruppe M nebeneinander an einer gemeinsamen Umfangsposition bzw. Winkelposition über die Rollenbreite verteilt mit freien Abständen A zueinander angeordnet sind. Bei dieser Ausführungsform gemäß Fig. 1a und 1b lassen sich folglich zeitgleich mit sämtlichen Messstellen 3 Messwerte für unterschiedliche Breitenpositionen ermitteln.

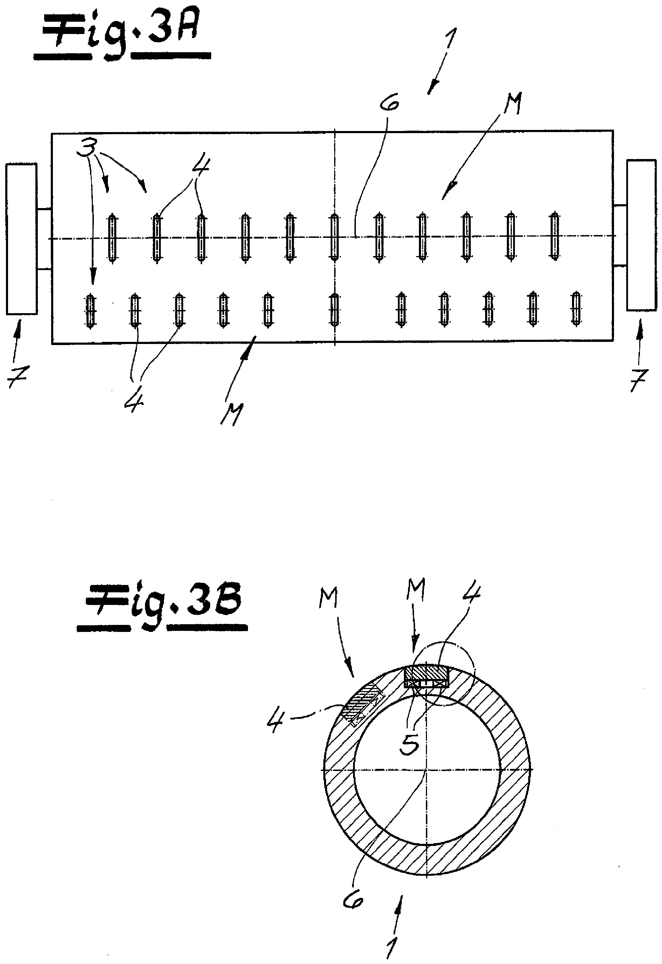

Bei der abgewandelten Ausführungsform nach Fig. 3a, 3b sind zwei Messstellengruppen M vorgesehen, die über den Umfang verteilt bzw. in Umfangsrichtung hintereinander angeordnet sind und dazu hintereinander um einen bestimmten Umfangswinkel versetzt angeordnet sind (vgl. insbesondere Fig. 3b). Aus Fig. 3a ist erkennbar, dass die Messstellen 3 dieser beiden Messgruppen M nicht nur in Umfangsrichtung versetzt, sondern insbesondere auch in Breitenrichtung versetzt zueinander angeordnet sind. Damit lassen sich mit der einen Messgruppe M Messwerte für andere Breitenpositionen ermitteln als mit der anderen Messgruppe M, so dass die Auflösung der Rolle über die Bandbreite erhöht wird.

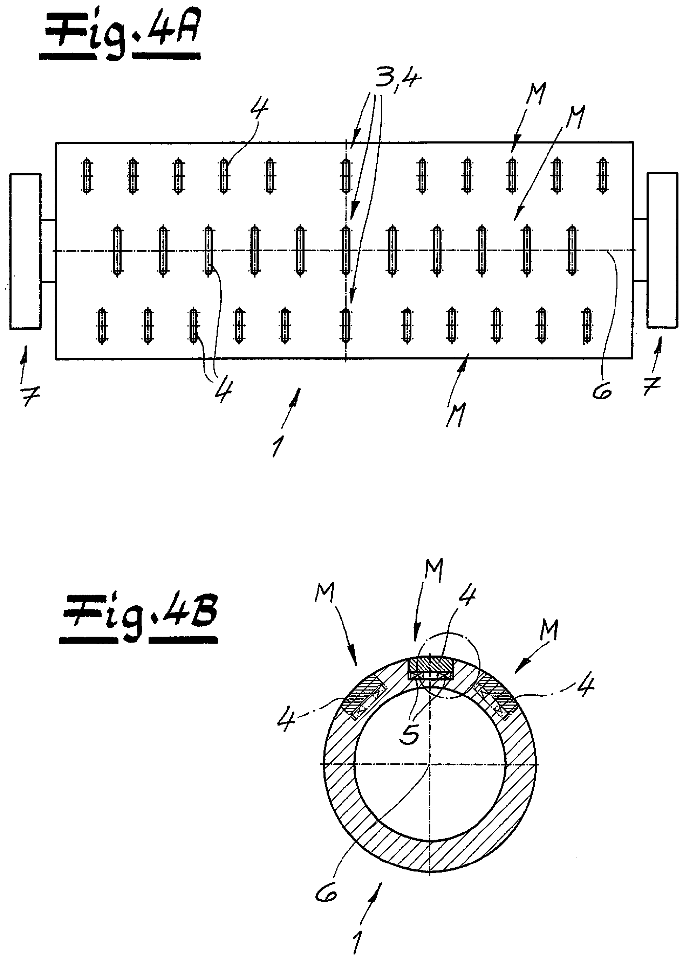

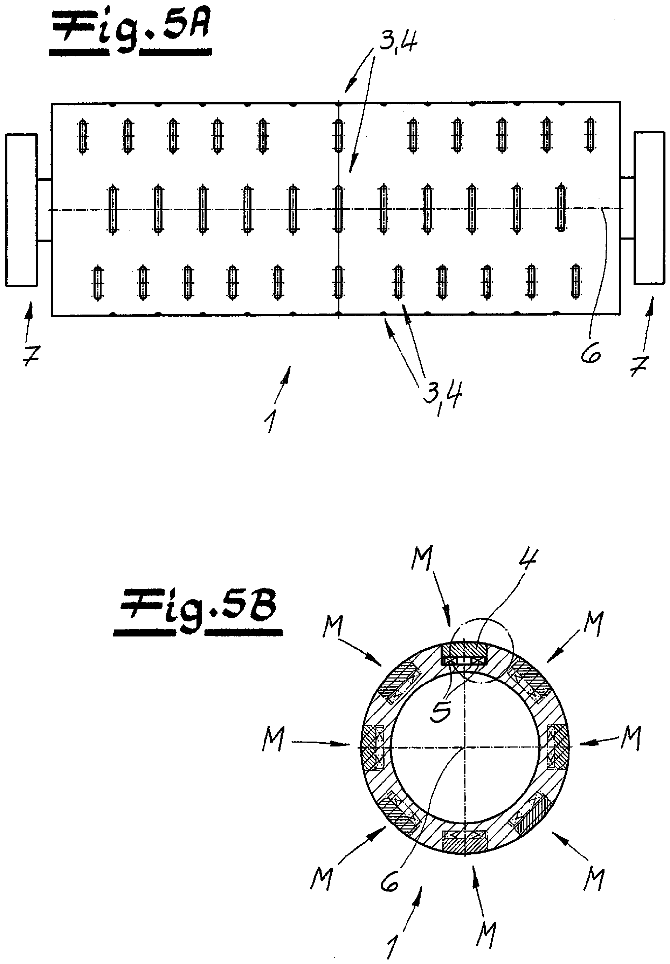

Eine Weiterentwicklung dieses Gedankens zeigen die Fig. 4a, 4b bzw. 5a, 5b, denn durch entsprechend versetzt angeordnete Messgruppen lässt sich die Auflösung über die Bandbreite bis hin zu einer "quasi kontinuierlichen" Messung über die Bandbreite erhöhen.

Dabei ist in den Fig. 4a, 4b sowie 5a, 5b ebenfalls erkennbar, dass sämtliche Messstellengruppen M eine Messstelle an derselben Breitenposition, im Ausführungsbeispiel in der Rollenmitte, aufweisen. Dieser Messbalken 4 in der Rollenmitte kann folglich als Referenzbalken verwendet werden, denn mit Hilfe dieses Messbalkens 4 lässt sich der Einfluss eventueller (zeitlicher) Bandzugschwankungen herausfiltern. Sofern z. B. mit zwei unmittelbar hintereinander angeordneten zentralen Messbalken 4 an derselben Breitenposition unterschiedliche Zugspannungen ermittelt werden, kann dieses auf zeitliche Bandzugschwankungen zurückgeführt werden.

In den Figuren ist im Übrigen erkennbar, dass die Messrolle 1 als passive Messrolle in seitlichen Lagerungen 7 drehbar gelagert ist. Es besteht jedoch alternativ die Möglichkeit, dass die Rolle mit zumindest einem Antrieb, z. B. einem Beschleunigungsantrieb, versehen ist, um Schlupf beim Beschleunigen oder Verzögern zu vermeiden. Einzelheiten sind nicht dargestellt.

Die einzelnen Messbalken 4 sind durch einen lediglich angedeuteten vollständig umlaufenden Spalt 8 von der Rollenoberfläche entkoppelt und die Messbalken 4 sind ausschließlich gegen die Kraftsensoren 5 verspannt, ohne dass die Messbalken (unmittelbar) auf dem Rollenkörper aufliegen. Auf diese Weise wird in grundsätzlicher bekannter Weise ein Kraftnebenschluss verhindert bzw. minimiert. Außerdem besteht durch diese Anordnung die Möglichkeit, vergleichbare Messwerte mit ein und demselben Messbalken für unterschiedliche Berührungspunkte des Bandes mit dem Messbalken zu erhalten.

## Patentansprüche

1. Planheitsmessrolle (1) zur Ermittlung von Planheitsfehlern eines Bandes (2), insbes. eines Metallbandes, im Wege einer Messung der Bandzugspannungsverteilung über die Bandbreite,
mit mehreren in die Rollenoberfläche integrierten Messstellen (3), welche für die Messung der Bandzugspannung über die Rollenbreite (B) verteilt an verschiedenen Breitenpositionen angeordnet sind,
wobei die Messstellen (3) jeweils einen mit der Rollenoberfläche fluchtenden Messbalken (4) aufweisen, wobei die Messbalken, jeweils auf zwei in Längsrichtung hintereinander angeordneten Kraftmesssensoren (5) aufliegen und
wobei die Messbalken (4) über zumindest einen eine Messlänge (*l*) definierenden Teil ihrer Länge (*l*') eine konstante Breite (b) aufweisen,
wobei mit den Messstellen (3) jeweils eine Vielzahl von Messwerten je Rollenumdrehung für die jeweilige Breitenposition erfassbar sind,
**dadurch gekennzeichnet, dass** die Messbalken (4) mit ihrer in Bandlaufrichtung (R) verlaufenden Längsrichtung in einer Draufsicht auf die Rollenoberfläche (6) senkrecht zur Rollenachse orientiert sind und über die Breite (B) verteilt zumindest fünf Messstellen (3) angeordnet sind.

2. Planheitsmessrolle nach Anspruch 1, wobei die Messkörper (4) als Messbalken ausgebildet sind, die eine größere Länge (*l*') und/oder Messlänge (*l*) als Breite aufweisen, wobei bevorzugt die Länge (*l*') bzw. Messlänge (*l*) zumindest das Zweifache, besonders bevorzugt zumindest das Dreifache der Breite (b) beträgt.

3. Planheitsmessrolle nach einem der Ansprüche 1 bis 2, wobei eine Messstellengruppe (M) mehrere Messstellen (3) aufweist, die über die Rollenbreite (B) verteilt mit Abständen zueinander an einer gemeinsamen Umfangs- bzw. Winkelposition angeordnet sind.

4. Planheitsmessrolle nach Anspruch 3, wobei über den Umfang verteilt mehrere Messstellengruppen (M) vorgesehen sind, die jeweils an unterschiedlichen Winkelpositionen angeordnet sind.

5. Planheitsmessrolle nach Anspruch 3 oder 4, wobei die Messstellen (4) zweier in Umfangsrichtung hintereinander angeordneter Messstellengruppen (M) zumindest teilweise in Breitenrichtung versetzt zueinander angeordnet sind.

6. Planheitsmessrolle nach einem der Ansprüche 3 bis 5, wobei alle Messstellengruppen (M) an einer vorgegebenen Breitenposition eine Messstelle (3) aufweisen, z. B. als Referenz-Messstelle.

7. Planheitsmessrolle nach einem der Ansprüche 1 bis 6, wobei über die Breite (B) verteilt, z. B. in einer Messstellengruppe, zumindest acht, z. B. zumindest zehn Messstellen (3) angeordnet sind.

8. Planheitsmessrolle nach einem der Ansprüche 1 bis 7, wobei die Messkörper (4), z. B. die Messbalken, eine Breite (b) von 10 mm bis 50 mm, z. B. 10 mm bis 30 mm und/oder eine Länge (*l*) oder Messlänge (*l*') von 50 mm bis 300 mm, vorzugsweise 50 mm bis 200 mm, z. B. 60 mm bis 140 mm aufweisen.

9. Planheitsmessrolle nach einem der Ansprüche 1 bis 7, wobei die Länge (*l*') oder Messlänge ((*l*) der Messkörper (4), z. B. der Messbalken, 5 % bis 20 % des Rollendurchmessers (D) beträgt.

10. Planheitsmessrolle nach einem der Ansprüche 1 bis 9, wobei der (freie) Abstand (A) zwischen zwei benachbarten Messstellen 20 mm bis 100 mm aufweist.

11. Planheitsmessrolle nach einem der Ansprüche 1 bis 10, wobei die Messkörper (4) durch einen vollständig umlaufenden Spalt (8) von der Rollenoberfläche entkoppelt sind und ausschließlich gegen die Kraftmesssensoren (5) verspannt sind.

12. Verfahren zur Ermittlung von Planheitsfehlern eines Bandes im Wege einer Messung der Bandzugspannungsverteilung über die Bandbreite mit einer Planheitsmessrolle nach einem der Ansprüche 1 bis 11, wobei mit den Messstellen bei jeder Rollenumdrehung jeweils eine Vielzahl von Messwerten für die jeweilige Breitenposition erfasst werden.

13. Verfahren nach Anspruch 12, wobei aus den für die jeweilige Breitenposition mit der Messstelle ermittelten Messwerten jeweils ein Mittelwert bestimmt wird.

14. Verfahren nach Anspruch 12 oder 13, wobei die Kontaktlänge des Bandes mit dem Messkörper, z. B. Messbalken geringer als die Länge bzw. Messlänge des Messkörpers, z. B. Messbalkens, ist.

15. Verfahren nach einem der Ansprüche 12 bis 14, wobei bei jeder Umdrehung der Messrolle vor dem Auflaufen des Bandes auf den Messkörper ein Reset der Kraftmesssensoren durchgeführt wird.

## Claims

1. A flatness measuring roller (1) for determining flatness errors of a strip (2), particularly of a metal strip, in the course of a measurement of the strip tension distribution over the strip width,
having a plurality of measurement points (3) integrated into the roller surface, which are arranged in a distributed manner at various width positions for measuring the strip tension over the roller width (B),
the measurement points (3) in each case having a measuring bar (4) flush with the roller surface,
the measuring bars in each case bearing on two force-measuring sensors (5) arranged one behind the other in the longitudinal direction, and
the measuring bars (4) having a constant width (b) at least over a part of the length (*l*') thereof defining a measuring length (*l*),
it being possible with the measurement points (3) to detect a multiplicity of measured values for each roller revolution for the respective width position in each case,
**characterized in that** the longitudinal direction of the measuring bars (4) running in the strip running direction (R) are orientated perpendicularly to the roller axis in a plan view onto the roller surface (6) and at least five measurement points (3) are arranged in a distributed manner over the width (B).

2. The flatness measuring roller according to Claim 1, wherein the measuring bodies (4) are constructed as measuring bars which have a larger length (*l*') and/or measuring length (*l*) than width, wherein the length (*l*') or measuring length (*l*) is at least twice, preferably at least three-times the width (b).

3. A flatness measuring roller according to one of Claims 1 to 2, wherein a group of measurement points (M) has a plurality of measurement points (3), which are arranged in a distributed manner over the roller width (B) with spacings from one another at a common circumferential or angular position.

4. A flatness measuring roller according to Claim 3, wherein a plurality of groups of measurement points (M) are provided in a distributed manner over the circumference, which are arranged at different angular positions in each case.

5. The flatness measuring roller according to Claim 3 or 4, wherein the measurement points (4) of two groups of measurement points (M) arranged one behind the other in the circumferential direction are at least to some extent arranged in an offset manner with respect to one another in the width direction.

6. The flatness measuring roller according to one of Claims 3 to 5, wherein all groups of measurement points (M) have a measurement point (3) at a predetermined width position, e.g. as reference measurement point.

7. The flatness measuring roller according to one of Claims 1 to 6, wherein at least eight, e.g. at least ten measurement points (3) are arranged, e.g. in a group of measurement points, in a distributed manner over the width (B).

8. The flatness measuring roller according to one of Claims 1 to 7, wherein the measuring bodies (4), e.g. the measuring bars, have a width (b) of 10 mm to 50 mm, e.g. 10 mm to 30 mm, and/or a length (*l*) or measuring length (*l*') of 50 mm to 300 mm, preferably 50 mm to 200 mm, e.g. 60 mm to 140 mm.

9. The flatness measuring roller according to one of Claims 1 to 7, wherein the length (*l*') or measuring length (*l*) of the measuring bodies (4), e.g. the measuring bars, is 5% to 20% of the roller diameter (D).

10. The flatness measuring roller according to one of Claims 1 to 9, wherein the (free) spacing (A) between two neighbouring measurement points is 20 mm to 100 mm.

11. The flatness measuring roller according to one of Claims 1 to 10, wherein the measuring bodies (4) are decoupled from the roller surface by a fully circumferential gap (8) and are braced against the force-measuring sensors (5) exclusively.

12. A method for determining flatness errors of a strip in the course of measuring the strip tension distribution over the strip width using a flatness measuring roller according to one of Claims 1 to 11, wherein the measurement points are used during each roller revolution to detect a multiplicity of measured values for the respective width position in each case.

13. The method according to Claim 12, wherein an average value is determined in each case from the measured values determined for the respective width position using the measurement point.

14. The method according to Claim 12 or 13, wherein the contact length of the strip with the measuring body, e.g. measuring bar, is less than the length or measuring length of the measuring body, e.g. measuring bar.

15. The method according to one of Claims 12 to 14, wherein a reset of the force measuring sensors is carried out during each revolution of the measuring roller before the strip runs onto the measuring body.

## Revendications

1. Rouleau de détection de la planéité (1) destiné à déterminer des défauts de planéité d'une bande (2), notamment d'une bande métallique, par voie d'une mesure de la distribution des efforts de traction de la bande sur la largeur de la bande,
avec plusieurs points de mesure (3) intégrés dans la surface du rouleau, qui pour la mesure des efforts de traction de la bande sont placés sur différentes positions en largeur, en étant distribués sur la largeur du rouleau (B),
les points de mesure (3) comportant chacun une barre de mesure (4) alignée sur la surface du rouleau,
sur au moins une partie de leur longueur (*l*') définissant une longueur de mesure (*l*), les barres de mesure (4) présentant une largeur (b) constante,
les barres de mesure reposant chacune sur deux capteurs de force (5) placés l'un derrière l'autre en direction longitudinale,
à l'aide des points de mesure (3), chaque fois une pluralité de valeurs mesurées par tour de rouleau étant détectable pour la position en largeur concernée, **caractérisé en ce que** par leur direction longitudinale s'écoulant dans la direction de déplacement de la bande (R), dans une vue en élévation sur la surface du rouleau (6), les barres de mesure(4) sont orientées à la perpendiculaire de l'axe du rouleau
et au moins cinq points de mesure (3) sont placés en étant distribués sur la largeur (B).

2. Rouleau de détection de la planéité selon la revendication 1, les corps de mesure (4) étant conçus en tant que barres de mesure qui présentent une longueur (*l'*) et/ou une longueur de mesure (*l*) supérieure à la largeur, de préférence la longueur (*l*') ou la longueur de mesure (*l*) correspondant au moins au double, de manière particulièrement préférée, au moins au triple de la largeur (b).

3. Rouleau de détection de la planéité selon l'une quelconque des revendications 1 ou 2, un groupe de points de mesure (M) comportant plusieurs points de mesure (3) qui sont placés sur une position périphérique ou angulaire commune, avec des écarts mutuels, en étant distribués sur la largeur du rouleau (B).

4. Rouleau de détection de la planéité selon la revendication 3, plusieurs groupes de points de mesure (M) distribués sur la périphérie étant prévus qui sont placés chacun sur différentes positions angulaires.

5. Rouleau de détection de la planéité selon la revendication 3 ou 4, les points de mesure (4) de deux groupes de points de mesure (M) placés l'un derrière l'autre dans la direction périphérique étant placés en étant déportés au moins partiellement l'un par rapport à l'autre, dans la direction de la largeur.

6. Rouleau de détection de la planéité selon l'une quelconque des revendications 3 à 5, tous les groupes de points de mesure (M) comportant sur une position en largeur prédéfinie un point de mesure (3), par ex. en tant que point de mesure de référence.

7. Rouleau de détection de la planéité selon l'une quelconque des revendications 1 à 6, au moins huit, par ex. au moins dix points de mesure (3) étant placés en étant distribués sur la largeur (B), par ex. dans un groupe de points de mesure.

8. Rouleau de détection de la planéité selon l'une quelconque des revendications 1 à 7, les corps de mesure (4), par ex. les barres de mesure présentant une largeur (b) de 10 mm à 50 mm, par ex. de 10 mm à 30 mm et/ou une longueur (1) ou une longueur de mesure (*l'*) de 50 mm à 300 mm, de préférence de 50 mm à 200 mm, par ex. de 60 mm à 140 mm.

9. Rouleau de détection de la planéité selon l'une quelconque des revendications 1 à 7, la longueur (*l*) ou la longueur de mesure (*l*') des corps de mesure (4), par ex. des barres de mesure, correspondant à de 5 % à 20 du diamètre du rouleau (D).

10. Rouleau de détection de la planéité selon l'une quelconque des revendications 1 à 9, l'écart (A) (libre) entre deux points de mesure étant de 20 mm à 100 mm.

11. Rouleau de détection de la planéité selon l'une quelconque des revendications 1 à 10, les corps de mesure (4) étant désaccouplés de la surface du rouleau par un interstice (8) totalement périphérique et étant contraints exclusivement contre les capteurs de force (5).

12. Procédé destiné à déterminer des défauts de planéité d'une bande, par voie d'une mesure de la distribution des efforts de traction de la bande sur la largeur de la bande, avec un rouleau de détection de la planéité selon l'une quelconque des revendications 1 à 11, à l'aide des points de mesure, à chaque tour de rouleau étant détectée chaque fois une pluralité de valeurs mesurées pour la position en largeur concernée.

13. Procédé selon la revendication 12, lors duquel, à partir des valeurs mesurées déterminées à l'aide du point de mesure, on définit chaque fois une valeur moyenne.

14. Procédé selon la revendication 12 ou 13, la longueur de contact de la bande avec le corps de mesure, par ex. la barre de mesure étant inférieure à la longueur ou à la longueur de mesure du corps de mesure, par ex. de la barre de mesures.

15. Procédé selon l'une quelconque des revendications 12 à 14, lors duquel, à chaque tour du rouleau de détection, avant l'accostage de la bande sur le corps de mesure, il est procédé à une réinitialisation des capteurs de force.
